(19) Europäisches Patentamt / European Patent Office / Office européen des brevets

(11) **EP 3 049 786 B1**

(12) **FASCICULE DE BREVET EUROPEEN**

(45) Date de publication et mention de la délivrance du brevet:
**11.07.2018 Bulletin 2018/28**

(21) Numéro de dépôt: **14784284.3**

(22) Date de dépôt: **12.09.2014**

(51) Int Cl.:
***G01M 1/28*** *(2006.01)*

(86) Numéro de dépôt international:
**PCT/FR2014/052268**

(87) Numéro de publication internationale:
**WO 2015/044552 (02.04.2015 Gazette 2015/13)**

(54) **PROCEDE DE DETECTION D'UN DESEQUILIBRAGE D'UNE ROUE DE VEHICULE PENDANT LE ROULAGE DU VEHICULE**

VERFAHREN ZUR ERKENNUNG EINER UNWUCHT AN EINEM KRAFTFAHRZEUGRAD WÄHREND DES ROLLENS DES FAHRZEUGES

METHOD FOR DETECTING AN IMBALANCE OF A VEHICLE WHEEL WHILE THE VEHICLE IS ROLLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2013 FR 1359179**

(43) Date de publication de la demande:
**03.08.2016 Bulletin 2016/31**

(73) Titulaire: **Renault S.A.S.**
**92100 Boulogne-Billancourt (FR)**

(72) Inventeurs:
• **PITA-GIL, Guillermo**
  **F-75014 Paris (FR)**
• **SAINT-LOUP, Philippe**
  **F-78760 Jouars Pontchartrain (FR)**
• **DAVINS-VALLDAURA, Joan**
  **F-75014 Paris (FR)**

(56) Documents cités:
**WO-A1-2007/030037    FR-A1- 2 566 124**

**Description**

L'invention a pour objet un procédé de détection d'un déséquilibrage de roue de véhicule pendant que le véhicule circule sur une route. Par déséquilibrage d'une roue, on entend une répartition qui n'est angulairement pas régulière, des éléments massiques de la roue. L'inertie d'un secteur angulaire de la roue peut alors être différente de l'inertie d'un autre secteur angulaire de la roue, de même amplitude angulaire.

Les processus de fabrication des jantes, des pneus et des enjoliveurs introduisent des dispersions dans l'inertie des roues des véhicules automobiles. Ces dispersions sont d'un ordre de grandeur suffisant à générer des vibrations dans la chaîne de transmission.

Ces vibrations sont notamment susceptibles de provoquer une fatigue prématurée, voire une rupture des pièces mécaniques du véhicule, et de générer un inconfort pour le conducteur et les passagers du véhicule.

Si le problème concerne une roue avant, les vibrations vont être généralement perçues par le conducteur au travers du volant et si elles concernent les roues arrière, elles seront détectées par les passagers.

Ces vibrations sont notamment susceptibles de provoquer des dysfonctionnements des systèmes de surveillance de la pression des pneumatiques. Certains de ces systèmes de surveillance permettent en effet de détecter un sous gonflage d'une roue sans utiliser de capteur de pression, en analysant notamment un signal de vitesse de rotation de chaque roue. Les hypothèses d'analyse du signal sont faussées si la roue est déséquilibrée.

Les défauts d'équilibrage des roues issues de fabrication sont aujourd'hui traités en usine grâce à des masses fixées au niveau du contour de la jante, pour compenser le défaut initial de répartition des masses. Cependant, au cours de la vie du véhicule, ces masses peuvent se déplacer ou se détacher de la roue. Ceci entraîne le déséquilibrage des roues concernées.

Les systèmes de détection d'un déséquilibrage de roue ne sont aujourd'hui applicables qu'à des roues démontées isolées du véhicule, ou utilisent un système nécessitant de placer le véhicule sur un banc d'essai, ou, comme par exemple dans la demande de brevet WO2007030037 (VOLVO), ou dans la demande de brevet JP52066242 (SHIMADZU CORP), nécessitent d'équiper le véhicule de détecteurs de vibration associés aux roues.

La demande de brevet JP55089729 (KOHGIKEN) propose un système de détection extérieur au véhicule. C'est un système qui se couple aux roues des véhicules (sans les démonter) pour diagnostiquer un déséquilibrage.

L'invention a pour but de proposer un système et un procédé de détection d'un déséquilibrage d'une roue d'un véhicule qui puisse surveiller de manière quasi permanente, au niveau de chaque roue du véhicule, une éventuelle survenue d'un déséquilibrage pendant le roulage du véhicule. Ce procédé de détection doit pouvoir être appliqué sans utiliser de capteur de pression de gonflage du pneumatique de la roue, ni de capteur de vibration de la roue.

A cette fin, l'invention propose un procédé de détection du déséquilibrage d'une roue de véhicule selon les revendications 1 à 6, dans lequel on mesure une vitesse de rotation de la roue pendant le roulage du véhicule, et on calcule une valeur filtrée en appliquant au moins un filtrage de type passe bande à la valeur mesurée de vitesse de rotation de la roue. La position de la bande passante du filtrage passe bande est décalée au cours du roulage en fonction de la vitesse de rotation de la roue.

De manière particulièrement avantageuse, la vitesse de rotation de la roue est mesurée pendant le roulage du véhicule. Par équilibre de la roue, on entend ici une répartition angulaire régulière des masses contribuant au moment d'inertie de la roue, par rapport à son axe de rotation. La vitesse de la roue peut être exprimée en vitesse angulaire, ou peut être exprimée en vitesse linéaire correspondante du véhicule en km/heure, en appliquant une règle de trois faisant intervenir le rayon théorique de la roue.

On calcule ensuite une valeur de variance représentative d'une variance statistique de la valeur filtrée, et on compare cette valeur de variance à un seuil de variance. Le seuil de variance est de préférence constant. Selon une variante de réalisation, le seuil de variance est fonction d'une vitesse de la roue, par exemple de la valeur mesurée de la vitesse de la roue, à laquelle on a appliqué un filtre passe bas.

Selon un mode de mise en oeuvre préféré, le calcul de la variance est fait en appliquant un filtrage de type passe bas à la valeur absolue de la différence entre la valeur filtrée et une valeur filtrée moyenne, la valeur filtrée moyenne étant elle-même le résultat d'un filtrage passe bas de la valeur filtrée.

Avantageusement, on ne prend en compte le résultat de la comparaison de la variance par rapport au seuil de variance, que pendant des phases de roulage où la vitesse du véhicule peut être considérée comme stabilisée. On peut notamment considérer que la vitesse du véhicule est stabilisée si une dérivée filtrée d'une valeur de vitesse de la roue reste, en valeur absolue, inférieure à un seuil d'accélération pendant une durée supérieure ou égale à un seuil de temps. Les méthodes de calcul de dérivées filtrées sont connues.

On peut appliquer en outre un premier filtrage de type passe bas à une valeur délivrée par un capteur de vitesse de roue, pour obtenir une vitesse de rotation de roue à laquelle on applique ensuite le filtrage de type passe bande.

De manière avantageuse, on applique en outre un filtrage final de type passe bas à la valeur de variance, pour obtenir une valeur filtrée de variance que l'on compare au seuil de variance. Typiquement, le seuil de variance peut être compris entre 0,03 et 0,6kmh$^{-1}$, par exemple égal à 0,4kmh$^{-1}$ pour un véhicule de type familial.

Le filtrage passe bande peut être effectué au moyen d'un filtre passe bande discret caractérisé par cinq coefficients variables, les cinq coefficients étant calculés en fonction de trois coefficients constants et d'une vitesse de rotation de la roue. Selon un mode de réalisation avantageux, un des coefficients constants est assimilable à une période d'échantillonnage du calculateur mettant en oeuvre le filtre passe bande.

Selon un autre aspect, l'invention propose une application d'un procédé de détection tel que décrit précédemment, à une surveillance du niveau de gonflage des roues d'un véhicule automobile selon la revendication 7. Cette surveillance peut se faire par l'utilisation des valeurs de vitesse de rotation de chaque roue du véhicule pour détecter une éventuelle anomalie de gonflage de la roue. On applique par exemple à chaque roue roulante du véhicule un procédé où, si la valeur de variance de la vitesse d'une des roues devient supérieure au seuil de variance, on modifie le mode d'évaluation du niveau de gonflage de la roue considérée. On considère que l'on modifie le mode d'évaluation si par exemple un mode d'alerte, qui peut viser le conducteur ou d'autres systèmes de surveillance, n'est plus pris en compte, ou est pris en compte de manière différente. On considère aussi que l'on modifie le mode d'évaluation si par exemple le niveau de gonflage d'un pneu de la roue est évalué à l'aide d'une première formule analytique tant que la variance de la vitesse de la roue reste inférieure ou égale au seuil de variance, et est évalué à l'aide d'une formule analytique différente quand la vitesse de la roue devient supérieure au seuil de variance.

On notera que les opérations de filtrage et de calcul de variance sont toutes calculées pendant le roulage du véhicule.

L'invention propose également un dispositif de détection d'un déséquilibrage de roue de véhicule automobile selon les revendications 8 et 9, le dispositif comprenant notamment un capteur de vitesse de rotation d'au moins une roue du véhicule et une unité de calcul d'un critère de déséquilibrage de la roue. L'unité de calcul est configurée pour effectuer une suite de filtrages du signal de capteur de vitesses pour arriver à une valeur de critère, dont au moins un filtrage de type passe bande, et est configurée, pendant au moins certaines étapes de roulage du véhicule, pour comparer la valeur de critère à un seuil. De manière préférentielle, ces étapes de roulage correspondent à des étapes où la vitesse du véhicule peut être considérée comme stabilisée.

L'invention concerne également un véhicule équipé du dispositif de détection décrit ci dessus.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 illustre un véhicule équipé d'un dispositif de détection selon l'invention,
- la figure 2 est un schéma simplifié du fonctionnement d'un dispositif de détection selon l'invention,
- la figure 3 illustre des courbes de vitesses de roues obtenues à une étape de calcul d'un procédé de détection selon l'invention,
- la figure 4 illustre des courbes de variance de vitesses de roues obtenues à une autre étape de calcul d'un procédé de détection selon l'invention.

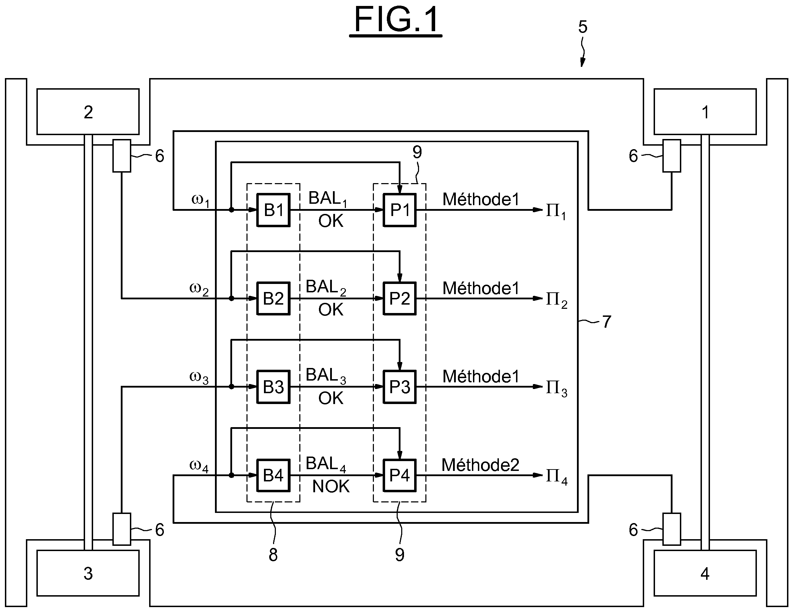

Tel qu'illustré sur la figure 1, un véhicule 5 se déplace sur quatre roues 1, 2, 3 et 4. Chacune des roues est équipée d'un capteur de vitesse 6 dédié à la roue. Les capteurs de vitesse 6 dédiés respectivement aux roues 1, 2, 3 et 4 délivrent respectivement une valeur de vitesse angulaire ou une valeur proportionnelle à une vitesse angulaire $\omega_1$, $\omega_2$, $\omega_3$, $\omega_4$ à une unité de commande électronique 7 du véhicule. Plus précisément, les capteurs de vitesse associés effectivement aux roues 1, 2, 3 et 4 délivrent leur vitesse enregistrée respectivement à un premier, un second, un troisième, un quatrième modules de calcul d'un critère d'équilibrage associé à la roue, respectivement $B_1$, $B_2$, $B_3$, $B_4$.

Chaque module de calcul d'un critère d'équilibrage envoie une valeur booléenne respectivement $BAL_1$, $BAL_2$, $BAL_3$, $BAL_4$ respectivement à un premier, un second, un troisième et un quatrième modules de calcul d'un critère de pression du pneu associé à la roue, respectivement $P_1$, $P_2$, $P_3$, $P_4$.

Chaque module de calcul du critère de pression reçoit également la valeur respectivement $\omega_1$, $\omega_2$, $\omega_3$, $\omega_4$ de vitesse de rotation issue du capteur de vitesse 6 de la roue considérée.

Les modules de calcul de pression de pneu peuvent utiliser différentes méthodes pour calculer la pression dans le pneu, notamment une méthode désignée par Methode1 et une méthode désignée par Methode2, qui est moins sensible que Methode1 aux effets des déséquilibrages de la roue, tout en étant a priori moins précise que Methode1 pour une roue correctement équilibrée.

Tant que les indicateurs $BAL_1$, $BAL_2$, $BAL_3$, $BAL_4$ indiquent que la roue concernée est correctement équilibrée, les modules de calcul du critère de pression $P_1$, $P_2$, $P_3$, $P_4$ utilisent la première méthode Methode1 pour calculer une pression respectivement $\Pi_1$, $\Pi_2$, $\Pi_3$, $\Pi_4$ de pression dans le pneu. Lorsque les valeurs booléennes correspondant aux critères d'équilibrage $BAL_1$, $BAL_2$, $BAL_3$, $BAL_4$ indiquent que l'équilibrage de la roue n'est pas suffisant, comme par exemple illustré ici pour la roue indicée 4, le module de calcul de critères d'équilibrage, par exemple ici $P_4$, envoie un signal booléen négatif au module de calcul de pression de pneu correspondant, qui sélectionne alors une méthode, ici la méthode 2, qui est moins sensible aux effets du déséquilibrage de la roue.

Ainsi, sur l'exemple illustré en figure 1, les pressions des pneus des roues 1, 2 et 3 sont calculées suivant la méthode 1 car les roues sont bien équilibrées, et la pression $\Pi_4$ de la quatrième roue est calculée par une autre méthode Methode2 qui est globalement moins précise mais qui est moins sensible également aux effets de déséquilibrage de la roue.

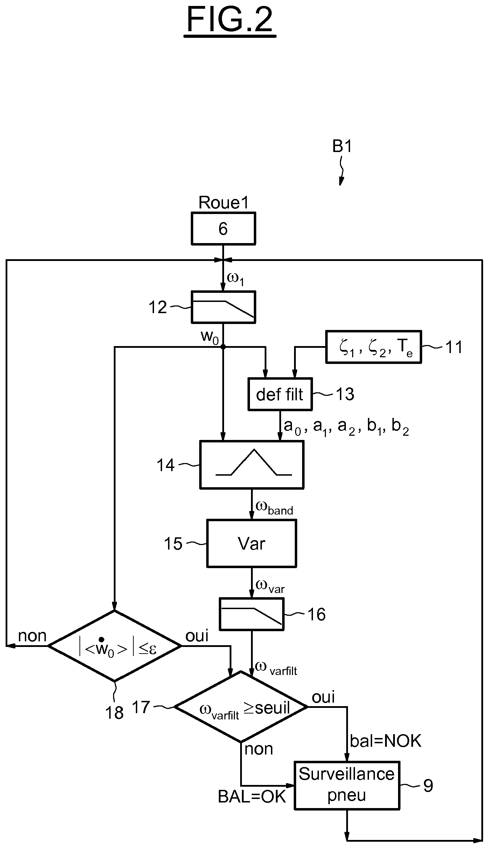

La figure 2 illustre une partie du mode de fonctionnement de l'unité 8 d'évaluation du déséquilibrage des roues regroupant les modules $B_1$, $B_2$, $B_3$, $B_4$ de la figure 1.

Sur la figure 1, les modules de calcul des critères de pression de pneus de la roue peuvent être regroupés au sein d'une même unité de calcul 9 de pression des roues du véhicule. La figure 2 illustre une partie du mode de fonctionnement d'un des modules de calcul $B_1$, $B_2$, $B_3$, $B_4$ de l'unité de commande électronique 7, par exemple le module $B_1$.

Tel qu'illustré sur la figure 2, la vitesse de rotation $\omega_1$ de la roue 1, mesurée par un des capteurs de vitesse 6, est transmise à un premier filtre passe bas 12 qui délivre une valeur filtrée wo de vitesse de rotation de la roue. Cette valeur de vitesse filtrée est envoyée d'une part à un module 13 de définition des paramètres d'un filtre passe bande 14, et d'autre part au filtre passe bande 14 correspondant. La vitesse filtrée wo est également envoyée à une unité de comparaison 18 qui calcule une valeur $\dot{w}_0$ de dérivée filtrée de la vitesse et compare la valeur absolue $|\dot{w}_0|$ de l'accélération ainsi obtenue à un seuil $\varepsilon$, pour décider si la vitesse du véhicule peut être ou non considérée comme stabilisée.

Le module 13 de définition du filtre 14 utilise trois valeurs $\zeta_1$, $\zeta_2$, $T_e$ enregistrées dans des blocs mémoire 11. Ces valeurs $\zeta_1$, $\zeta_2$, $T_e$ sont des valeurs constantes et sont utilisées par le module 13 conjointement à la vitesse de la roue wo, pour définir cinq paramètres de filtres $a_0$, $a_1$, $a_2$, $b_1$, $b_2$, qui sont envoyés vers le filtre passe bande 14. Le filtre passe bande 14 applique un filtrage de type passe bande à la vitesse wo et délivre une valeur $\omega_{band}$ à un module 15 de calcul de variance de la vitesse.

Le module 15 de variance de la vitesse délivre ensuite une valeur $\omega_{var}$ à un filtre passe bas 16 qui délivre à son tour une valeur $\omega_{varfilt}$ correspondant à une variance filtrée de la vitesse de la roue 1.

Un comparateur 17 compare cette valeur à un seuil « seuil » de variance. Si la valeur de variance filtré $\omega_{varfilt}$ est supérieure au seuil, le comparateur 17 délivre un booléen « BAL » par exemple de valeur négative à l'unité 9 de calcul de la pression de gonflage des pneus.

Si la variance filtrée $\omega_{varfilt}$ est inférieure au seuil, c'est un booléen « BAL » de valeur opposée, par exemple ici une valeur positive, que le comparateur délivre au module 9 de surveillance de la pression des pneumatiques. On peut envisager des variantes de réalisation où la signification de la variante booléenne BAL serait inversée et le raisonnement global resterait le même.

Cependant, la valeur booléenne BAL n'est délivrée que si le test 18 concernant la stabilisation de la vitesse wo indique que la vitesse du véhicule est effectivement stabilisée. Si la vitesse du véhicule n'est pas stabilisée, la valeur booléenne BAL n'est pas émise et on continue à surveiller la vitesse de la roue en reprenant par exemple le processus en amont du premier filtre passe bas 12.

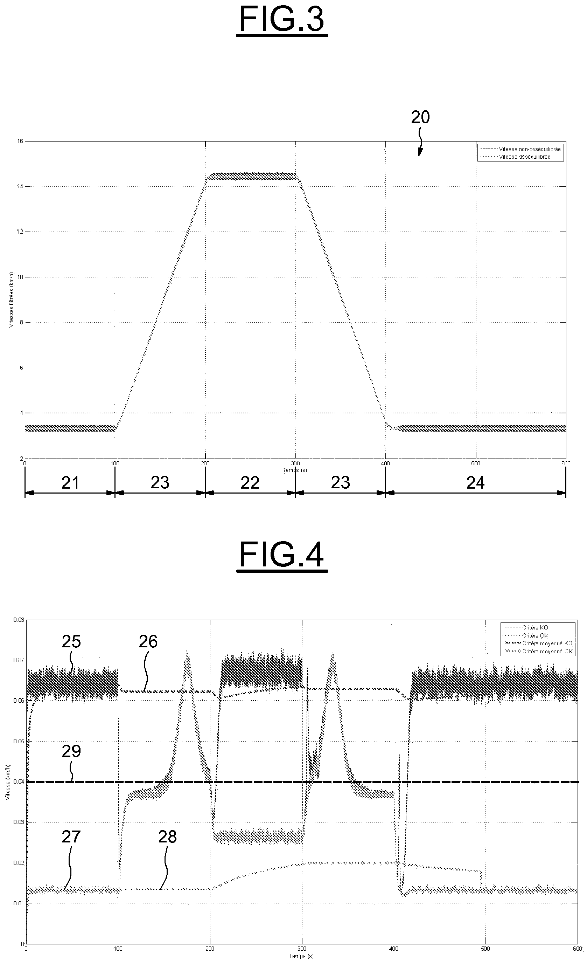

Sur la figure 3, sont regroupées deux courbes en fonction du temps d'une vitesse de roue d'un véhicule. On distingue une courbe en gris plus sombre correspondant à une vitesse de roue déséquilibrée et une vitesse en gris plus clair correspondant à une vitesse de roue équilibrée. Sur l'exemple illustré, le véhicule circule d'abord à une vitesse proche de 30 km/h avant d'accélérer et de se stabiliser à une vitesse proche de 140 km/h, puis redescendre à nouveau à 30 km/h. Les intervalles de temps 21 et 24 correspondent au roulage stabilisé à 30 km/h, l'intervalle de temps 22 correspond à un roulage à 140 km/h et deux intervalles de temps 23 correspondent à un régime non stabilisé de roulage pour passer de la vitesse de 30 à 140 km/h et inversement.

On remarque que pendant les phases de plateau 21, 22 et 24, la vitesse de la roue déséquilibrée présente des oscillations de plus grande amplitude que la vitesse de la roue bien équilibrée. Les courbes représentées sur la figure 3 correspondent à des courbes issues d'un premier filtrage passe bas, par exemple du type filtrage 12 illustré en figure 2.

La figure 4 illustre les courbes de la figure 3 après leur traitement par le filtre passe bande 14 de la figure 2, puis après le filtrage de ces courbes par un dernier filtre passe bas 16. Ainsi, la courbe continue 25 en gris sombre représente la valeur de vitesse d'une roue déséquilibrée après passage de la vitesse émise par les capteurs au travers du filtre passe bas 12 puis au travers du filtre passe bande 14 puis au travers du module de calcul de variance 15.

La courbe continue 27 en gris clair représente la variance de vitesse de rotation d'une roue bien équilibrée après le même traitement de filtrage de la valeur de vitesse délivrée par le capteur associé à cette roue. La courbe 26 en pointillés sombres est obtenue en appliquant un filtre passe bas à la courbe 25 pendant les phases 21, 22 et 24 pendant lesquelles la vitesse 1 du véhicule est stabilisée. Pendant les phases 23 transitoires, la valeur de la courbe 26 reste constante, égale à la dernière valeur précédente calculée. La courbe 28 en pointillés clairs résulte d'un traitement analogue de la courbe 27 de variance de la roue équilibrée. Les courbes 26 et 28 peuvent être comparées à un seuil, ici choisi égal à 0,04km/h. Cette comparaison correspond au test du comparateur 17 de la figure 2 et peut n'être appliquée que pendant les phases 21, 22 et 24 où la vitesse du véhicule est stabilisée. Pendant les phases transitoires 23, on peut, soit comme sur la figure 4, ne pas effectuer le test 17, soit attribuer une valeur arbitraire à la fonction de variance filtrée. Comme visible sur la figure 4, les courbes résultant du traitement selon l'invention de la vitesse délivrée par un capteur de vitesse de chaque roue, peuvent être chacune comparées à un seuil, et délivrent une information relativement constante permettant de savoir si la roue est ou non correctement équilibrée.

Le filtre passe bande de l'invention est choisi pour avoir une bande passante très étroite. Il s'agit d'un filtre discret puisque son but est d'être implémenté dans un calculateur de véhicule. Cette bande passante est centrée sur la vitesse de la roue, estimée à partir du capteur associé à la roue, à l'exclusion des capteurs associés aux autres roues du véhicule. La vitesse estimée de la roue sur laquelle est centrée la bande passante peut être une valeur ayant déjà subi un filtrage numérique pour éliminer le bruit du signal du capteur.

Le filtre passe bande est adaptatif, c'est-à-dire que les fréquences « passantes » se déplacent en fonction de la vitesse de rotation de la roue à tout instant, pour rester centré sur cette vitesse de rotation.

Le filtre passe bande préféré dans le cadre de l'invention est un filtre « passe-bande » à structure simple mais comportant des paramètres qui peuvent être reliés à des valeurs physiques mesurables sur le véhicule. La structure proposée est décrite par la fonction de transfert suivante :

$$\text{PB}(s) = \frac{s^2 + 2\xi_1 w_0 s + w_0^2}{s^2 + 2\xi_2 w_0 s + w_0^2}$$

Où $w_0$ est la fréquence «passante» et $\xi_1$ et $\xi_2$ sont les coefficients d'amortissement des deux pôles (respectivement zéro) complexes conjugués.

Les paramètres $\xi_1$ et $\xi_2$, sont par exemple choisis expérimentalement de manière à ce que la largeur de la bande passante englobe les composantes du signal liées au déséquilibrage, tout en éliminant les pics liés à d'autres phénomènes que le déséquilibrage.

L'invention propose d'effectuer un changement de variables permettant de remplacer ce filtre par un filtre équivalent discret.

Les racines du numérateur/dénominateur sont :

$$s = \frac{-2\xi_i w_0 \pm \sqrt{4\xi_i^2 w_0^2 - 4w_0^2}}{2} = -\xi_i w_0 \pm \sqrt{\xi_i^2 w_0^2 - w_0^2} = -\xi_i w_0 \pm w_0 \sqrt{\xi_i^2 - 1}$$

De plus, on sait que par construction les racines sont complexes conjuguées, donc : $\xi_i^2 - 1 < 0$. Ce qui nous permet d'écrire les racines du numérateur/dénominateur sous la forme :

$$s = -\xi_i w_0 \pm w_0 \sqrt{1 - \xi_i^2} \, i$$

Où i est le nombre imaginaire correspondant à la racine de -1.

Dans l'invention, on choisit d'utiliser un filtre passe bande discret ayant une fonction de transfert du type :

$$\text{PB}(z^{-1}) = \frac{a_0 + a_1 z^{-1} + a_2 z^{-2}}{1 + b_1 z^{-1} + b_2 z^{-2}} = \frac{a_0 z^2 + a_1 z^1 + a_2}{z^2 + b_1 z^1 + b_2}$$

Où $z^{-1}$ est l'opérateur retard unitaire.

Le filtre passe bande est donc caractérisé par cinq coefficients a0, a1, a2, b1, b2.

L'invention propose d'utiliser une méthode de discrétisation particulière, la discrétisation par correspondance ou « matched discretisation » en anglais. Cette méthode de discrétisation permet d'assurer que les fréquences passantes du filtre discret restent bien centrées sur les mêmes fréquences passantes que celles du filtre continu choisi.

En appliquant cette méthode de discrétisation, on obtient :

$$a_0 z^2 + a_1 z^1 + a_2 = 0 \leftrightarrow a_0 z^2 + \frac{a_1}{a_0} z + \frac{a_2}{a_0} = 0$$

D'où :

$$z = \frac{-\dfrac{a_1}{a_0} \pm \sqrt{\dfrac{a_1^2}{a_0^2} - \dfrac{4a_2}{a_0}}}{2} = -\frac{a_1}{2a_0} \pm \sqrt{\left(\frac{a_1}{2a_0}\right)^2 - \frac{a_2}{a_0}}$$

On sait aussi que les racines sont complexes conjuguées, donc :

$$\left(\frac{a_1}{2a_0}\right)^2 - \frac{a_2}{a_0} < 0$$

Soit :

$$z = -\frac{a_1}{2a_0} \pm \sqrt{\frac{a_2}{a_0} - \left(\frac{a_1}{2a_0}\right)^2}\, i$$

Et pour le dénominateur :

$$z = -\frac{b_1}{2} \pm \sqrt{b_2 - \left(\frac{b_1}{2}\right)^2}\, i$$

On effectue ensuite la correspondance des pôles et des zéros des filtres :

$$z = e^{sT_e}$$

Avec $T_e$ la période d'échantillonnage.

$$-\frac{a_1}{2a_0} \pm \sqrt{\frac{a_2}{a_0} - \left(\frac{a_1}{2a_0}\right)^2}\, i = e^{T_e\left[-\xi_1 w_0 \pm w_0 \sqrt{1-\xi_1^2}\right]}$$

$$-\frac{a_1}{2a_0} \pm \sqrt{\frac{a_2}{a_0} - \left(\frac{a_1}{2a_0}\right)^2}\, i = e^{-\xi_1 w_0 T_e} e^{\pm w_0 T_e \sqrt{1-\xi_1^2}\, i}$$

On définit quatre variables intermédiaires de calcul $C_1$, $C_2$, $C_3$, $C_4$.

$$\begin{cases} -\dfrac{a_1}{2a_0} = e^{-\xi_1 w_0 T_e} \cos(w_0 T_e \sqrt{1-\xi_1^2}) = C_1 \\[3mm] \sqrt{\dfrac{a_2}{a_0} - \left(\dfrac{a_1}{2a_0}\right)^2} = e^{-\xi_1 w_0 T_e} \sin(w_0 T_e \sqrt{1-\xi_1^2}) = C_2 \end{cases}$$

$$\begin{cases} -\dfrac{a_1}{2} = e^{-\xi_2 w_0 T_e} \cos(w_0 T_e \sqrt{1-\xi_1^2}) = C_3 \\ \sqrt{\dfrac{a_2}{1} - \left(\dfrac{a_1}{2}\right)^2} = e^{-\xi_2 w_0 T_e} \sin(w_0 T_e \sqrt{1-\xi_2^2}) = C_4 \end{cases}$$

Une condition supplémentaire à respecter pour la discrétisation est que le gain statique doit être unitaire soit :

$$a_0 + a_1 + a_2 = 1 + b_1 + b_2$$

On aboutit à un système à 5 équations et 5 inconnues dont la solution est :

$$\begin{cases} b_1 = -2C_3 \\ b_2 = C_4^2 + C_3^2 \\ a_0 = \dfrac{1 + C_4^2 + C_3^2 - 2C_3}{1 + C_2^2 - 2C_1 + C_1^2} \\ a_1 = \dfrac{-2C_1(1 + C_4^2 + C_3^2 - 2C_3)}{1 + C_2^2 - 2C_1 + C_1^2} \\ a_2 = 1 + b_1 + b_2 - a_0 - a_1 \end{cases}$$

Le module 13 de définition de filtre est configuré pour calculer les cinq coefficients $a_0$, $a_1$, $a_2$, $b_1$, $b_2$ à partir de la vitesse filtrée wo, et de trois paramètres $\xi_1$, $\xi_2$, $T_e$, constants dont le dernier est corrélé à une période d'échantillonnage du calculateur appliquant le filtre passe bande 14.

Si on observe les signaux de deux roues différentes du véhicule en sortie du filtre passe bande, (signaux illustré en figure 3) on peut observer très nettement une différence entre les signaux issus d'une roue équilibrée (gris clair) et d'une roue déséquilibrée (gris foncé). Alors que si on regarde un signal égal à la différence entre les signaux de vitesse de deux roues on ne parvient pas à connaître l'état de chaque roue.

On observe dans la figure 3 une différence en termes de variance du signal, entre la roue équilibrée et la roue déséquilibrée. Autrement dit, les deux signaux ont les mêmes valeurs en moyenne mais le signal issu d'une roue déséquilibrée varie plus autour de cette valeur moyenne commune.

C'est pourquoi l'invention propose d'appliquer une transformation du signal au niveau du calculateur de variance 15 dont le résultat est indicatif de la variance du signal. De multiples méthodes de calcul sont envisageables. Par souci de simplicité et de robustesse du procédé de calcul, l'invention propose la transformation suivante :

$\omega_{var} = \langle |(\omega_{band} - \langle \omega_{band} \rangle)| \rangle$ où $\langle \ \rangle$ est un opérateur de moyennage, par exemple un filtre passe bas.

Autrement dit, on calcule une moyenne de vitesse filtrée en appliquant un filtrage passe bas à la vitesse filtrée $\omega_{band}$, puis on calcule la valeur absolue de la différence entre la sortie $\omega_{band}$ du filtre passe bande et la moyenne de vitesse filtrée. Des nombreuses autres réalisations de formules permettant de quantifier une variance peuvent être envisagées.

La variable $\omega_{var}$ peut elle-même être soumise à un filtrage, par exemple de type passe bas 16, pour obtenir une valeur filtrée de variance $\omega_{varfilt}$ moins sujette aux bruits.

La valeur $\omega_{var}$ peut ensuite être comparée à un seuil de variance "seuil". Selon les variantes de réalisation, la valeur $\omega_{var}$ peut encore être filtrée, par exemple par un filtre passe bas 16, avant qu'on ne lui applique la comparaison par rapport au seuil. Comme illustré sur la figure 2, le résultat de la comparaison par rapport au seuil n'est pris en compte que si le régime de rotation de la roue est dans une phase stabilisée, par exemple si une accélération angulaire de la roue, calculée par exemple à partir de la vitesse filtrée wo, est restée en valeur absolue inférieure à un seuil d'accélération $\varepsilon$ depuis un temps minimal $\delta t_0$.

Le seuil de variance "seuil" peut être appris par le système lors des premiers roulages du véhicule, ou peut être une valeur enregistrée dans le calculateur du véhicule lors du processus de fabrication de la voiture. Selon une variante de réalisation, cette valeur peut être modifiée lorsque l'équilibrage des roues est refait.

L'invention ne se limite pas aux exemples de réalisation décrits et peut se décliner en de nombreuses variantes. On peut introduire des étapes supplémentaires de filtrage de bruit dans la procédure, ou omettre un des filtres passe bas 12 et/ou 16. La vitesse de roue soumise au filtrage peut être une vitesse angulaire, ou une valeur proportionnelle à cette vitesse angulaire par un facteur constant, par exemple la vitesse correspondante en km/h du véhicule en prenant en compte le diamètre théorique de la roue.

Grâce au système de détection selon l'invention, on peut détecter à tout moment pendant le roulage du véhicule, qu'une des roues du véhicule n'est plus équilibrée, et adapter les systèmes de surveillance des roues, par exemple un système de surveillance du gonflage des pneus, pour limiter les imprécisions liées à ce déséquilibrage.

**Revendications**

1. Procédé de détection du déséquilibrage d'une roue de véhicule, dans lequel on mesure une vitesse de rotation ($\omega_1$) de la roue (1) pendant le roulage du véhicule, on calcule une valeur filtrée ($\omega_{band}$) en appliquant au moins un filtrage (14) de type passe bande à la valeur mesurée de vitesse de rotation de la roue, **caractérisé en ce que** la position de la bande passante du filtrage passe bande (14) est décalée au cours du roulage en fonction de la vitesse de rotation de la roue ($\omega_1$), et **en ce qu'**on calcule ensuite une valeur de variance ($\omega_{var}$) représentative d'une variance statistique de la valeur filtrée ($\omega_{band}$), et qu'on compare cette valeur de variance à un seuil de variance (seuil).

2. Procédé de détection selon la revendication 1, dans lequel le calcul de la variance ($\omega_{var}$) est fait en appliquant un filtrage de type passe bas à la valeur absolue de la différence entre la valeur filtrée ($\omega_{band}$) et une valeur filtrée moyenne, la valeur filtrée moyenne étant elle-même le résultat d'un filtrage passe bas de la valeur filtrée ($\omega_{band}$).

3. Procédé de détection selon l'une des revendications 1 ou 2, dans lequel on ne prend en compte le résultat de la comparaison de la variance par rapport au seuil de variance, que pendant des phases de roulage où la vitesse du véhicule peut être considérée comme stabilisée.

4. Procédé de détection selon l'une quelconque des revendications 1 à 3, dans lequel on applique en outre un premier filtrage de type passe bas (12) à une valeur ($\omega_1$) délivrée par un capteur de vitesse de roue, pour obtenir une vitesse de rotation de roue ($w_o$) à laquelle on applique ensuite le filtrage de type passe bande (14).

5. Procédé de détection selon l'une quelconque des revendications 1 à 4, dans lequel on applique en outre un filtrage final (16) de type passe bas à la valeur de variance ($\omega_{var}$), pour obtenir une valeur filtrée de variance ($\omega_{varflit}$) que l'on compare au seuil de variance ("seuil").

6. Procédé de détection selon l'une quelconque des revendications précédentes, dans lequel le filtrage passe bande (14) est effectué au moyen d'un filtre passe bande discret **caractérisé par** cinq coefficients variables ($a_0$, $a_1$, $a_2$, $b_1$, $b_2$), les cinq coefficients étant calculés en fonction de trois coefficients constants ($\xi_1$, $\xi_2$, $T_e$) et d'une vitesse de rotation ($wo$) de la roue.

7. Application d'un procédé de détection selon l'une quelconque des revendications 1 à 6, à une surveillance du niveau de gonflage des roues d'un véhicule automobile.

8. Dispositif de détection du déséquilibrage d'une roue de véhicule automobile, le dispositif comprenant un capteur (6) de vitesse de rotation ($\omega_1$) de la roue (1) et une unité de calcul (B1) d'un critère de déséquilibrage ($\omega_{varflit}$) de la roue, **caractérisé en ce que** l'unité de calcul (B1) est configurée pour effectuer au moins un filtrage de type passe bande du signal de capteur de vitesses , la position de la bande passante étant décalée au cours du roulage en fonction de la vitesse de rotation de la roue ($\omega_1$), et **en ce que** l'unité de calcul (B1) est configurée, pendant au moins certaines étapes de roulage du véhicule, pour comparer à un seuil (seuil) une valeur représentative d'une variance statistique du signal ($\omega_{varflit}$) issu du filtrage de type passe bande.

9. Véhicule équipé d'un dispositif de détection selon la revendication 8.

**Patentansprüche**

1. Verfahren zur Erkennung einer Unwucht eines Fahrzeugreifens, wobei eine Rotationsgeschwindigkeit ($\omega_1$) des Reifens (1) während des Rollens des Fahrzeugs gemessen wird, ein gefilterter Wert ($\omega_{band}$) durch Anlegen mindestens eines Filterns (14) vom Bandpass-Typ an den gemessenen Wert der Rotationsgeschwindigkeit des Reifens berechnet wird, **dadurch gekennzeichnet, dass** die Position des Bandpasses des Bandpassfilterns (14) während des Rollens als Funktion der Rotationsgeschwindigkeit ($\omega_1$) des Reifens verschoben wird, und dadurch, dass an-

**EP 3 049 786 B1**

schließend ein Varianzwert ($\omega_{var}$) berechnet wird, der für eine statistische Varianz des gefilterten Werts ($\omega_{band}$) repräsentativ ist, und dieser Varianzwert mit einer Varianzschwelle (seuil) verglichen wird.

2. Erkennungsverfahren nach Anspruch 1, wobei die Berechnung der Varianz ($\omega_{var}$) durchgeführt wird, indem ein Filtern vom Tiefpass-Typ an den Absolutwert der Differenz zwischen dem gefilterten Wert ($\omega_{band}$) und einem mittleren gefilterten Wert angelegt wird, wobei der mittlere gefilterte Wert selbst das Ergebnis eines Tiefpassfilterns des gefilterten Werts ($\omega_{band}$) ist.

3. Erkennungsverfahren nach einem der Ansprüche 1 oder 2, wobei das Ergebnis des Vergleichs der Varianz im Verhältnis zur Varianzschwelle nur während der Rollphasen berücksichtigt wird, wo die Geschwindigkeit des Fahrzeugs als stabilisiert angesehen werden kann.

4. Erkennungsverfahren nach einem der Ansprüche 1 bis 3, wobei außerdem ein erstes Filtern (12) vom Tiefpass-Typ an einen Wert ($\omega_1$) angelegt wird, der von einem Reifengeschwindigkeitssensor geliefert wird, um eine Reifenrotationsgeschwindigkeit ($\omega_0$) zu erhalten, an die anschließend das Filtern (14) vom Bandpass-Typ angelegt wird.

5. Erkennungsverfahren nach einem der Ansprüche 1 bis 4, wobei außerdem ein Endfiltern (16) vom Tiefpass-Typ an den Varianzwert ($\omega_{var}$) angelegt wird, um einen gefilterten Varianzwert ($\omega_{varfilt}$) zu erhalten, der mit einer Varianzschwelle ("seuil") verglichen wird.

6. Erkennungsverfahren nach einem der vorhergehenden Ansprüche, wobei das Bandpassfiltern (14) mittels eines diskreten Bandpassfilters durchgeführt wird, das durch fünf variable Koeffizienten ($a_0$, $a_1$, $a_2$, $b_1$, $b_2$) gekennzeichnet ist, wobei die fünf Koeffizienten als Funktion von drei konstanten Koeffizienten ($\xi_1$, $\xi_2$, $T_e$) und einer Rotationsgeschwindigkeit ($\omega_0$) des Reifens berechnet werden.

7. Anwendung eines Erkennungsverfahrens nach einem der Ansprüche 1 bis 6 auf die Überwachung des Aufblasdrucks der Reifen eines Kraftfahrzeugs.

8. Vorrichtung zur Erkennung einer Unwucht eines Kraftfahrzeugreifens, wobei die Vorrichtung einen Sensor (6) der Rotationsgeschwindigkeit ($\omega_1$) des Reifens (1) und eine Berechnungseinheit (B1) eines Unwuchtkriteriums ($\omega_{varfilt}$) des Reifens umfasst, **dadurch gekennzeichnet, dass** die Berechnungseinheit (B1) ausgelegt ist, mindestens ein Filtern vom Bandpass-Typ des Geschwindigkeitssensorsignals durchzuführen, wobei die Position des Bandpasses während des Rollens als Funktion der Rotationsgeschwindigkeit ($\omega_1$) des Reifens verschoben wird, und dadurch, dass die Berechnungseinheit (B1) während mindestens bestimmter Etappen des Rollens des Fahrzeugs ausgelegt ist, mit einer Schwelle (seuil) einen Wert zu vergleichen, der für eine statistische Varianz ($\omega_{varfilt}$) des Signals repräsentativ ist, das von dem Filtern vom Bandpass-Typ stammt.

9. Fahrzeug, welches mit einer Erkennungsvorrichtung nach Anspruch 8 ausgestattet ist.

**Claims**

1. Method of detecting the imbalance of a vehicle wheel, in which a rotation speed ($\omega_1$) of the wheel (1) is measured while the vehicle is moving, a filtered value ($\omega_{band}$) is calculated by applying at least one step (14) of band-pass type filtering to the measured rotation speed value of the wheel, **characterized in that** the position of the pass-band of the band-pass filtering step (14) is offset while moving as a function of the rotation speed ($\omega_1$) of the wheel, and **in that** a variance value ($\omega_{var}$) is then calculated representative of a statistical variance of the filtered value ($\omega_{band}$) and that this variance value is compared to a variance threshold (threshold).

2. Detection method according to Claim 1, wherein the variance ($\omega_{var}$) is calculated by applying a step of low-pass type filtering to the absolute value of the difference between the filtered value ($\omega_{band}$) and a mean filtered value, the mean filtered value being itself the result of low-pass filtering of the filtered value ($\omega_{band}$).

3. Detection method according to either one of Claims 1 and 2, wherein the result of the comparison of the variance with the variance threshold is taken into account only during phases of movement in which the speed of the vehicle may be considered as stabilized.

4. Detection method according to any one of Claims 1 to 3, wherein a first step (12) of low-pass type filtering is moreover applied to a value ($\omega_1$) delivered by a wheel speed sensor to obtain a wheel rotation speed ($w_0$) to which the band-pass type filtering step (14) is then applied.

5. Detection method according to any one of Claims 1 to 4, wherein a final step (16) of low-pass type filtering is moreover applied to the variance value ($\omega_{var}$) to obtain a filtered variance value ($\omega_{varfilt}$) that is compared to the variance threshold ("threshold").

6. Detection method according to any one of the preceding claims, wherein the band-pass filtering step (14) is effected by means of a discrete band-pass filter **characterized by** five variable coefficients ($a_0$, $a_1$, $a_2$, $b_1$, $b_2$), the five coefficients being calculated as a function of three constant coefficients ($\xi_1$, $\xi_2$, $T_e$) and a rotation speed ($w_0$) of the wheel.

7. Application of a detection method according to any one of Claims 1 to 6 to monitoring of the level of inflation of the wheels of a motor vehicle.

8. Device for detecting the imbalance of a motor vehicle wheel, the device including a sensor (6) of the rotation speed ($\omega_1$) of the wheel (1) and a unit (B1) for calculating an imbalance criterion ($\omega_{varfilt}$) for the wheel, **characterized in that** the calculation unit (B1) is configured to effect at least one step of band-pass type filtering of the speed sensor signal, the position of the pass-band being offset while moving as a function of the rotation speed ($\omega_1$) of the wheel, and **in that** the calculation unit (B1) is configured, during at least some steps of movement of the vehicle, to compare to a threshold (threshold) a value representative at a statistical variance of the signal ($\omega_{varfilt}$) produced by the band-pass type filtering step.

9. Vehicle equipped with a detection device according to Claim 8.

## FIG.1

EP 3 049 786 B1

# FIG.2

B1

Roue1

| 6 |
|---|

$\omega_1$

12 —

$w_0$

$\zeta_1$ , $\zeta_2$ , $T_e$ — 11

def filt — 13

$a_0$ , $a_1$ , $a_2$ , $b_1$ , $b_2$

14 —

$\omega_{band}$

| 15 — | Var |
|---|---|

$\omega_{var}$

— 16

non ← $| < \dot{w}_0 > | \leq \varepsilon$ → oui

$\omega_{varfilt}$

18   17 — $\omega_{varfilt} \geq$ seuil → oui

non

bal=NOK

BAL=OK →

| Surveillance pneu | — 9 |
|---|---|

# FIG.3

20

|←— 21 —→|←— 23 —→|←— 22 —→|←— 23 —→|←——— 24 ———→|

# FIG.4

25    26

29

27    28

## RÉFÉRENCES CITÉES DANS LA DESCRIPTION

**Documents brevets cités dans la description**

- WO 2007030037 A
- JP 52066242 B
- JP 55089729 B